Europäisches Patentamt

European Patent Office

Office européen des brevets

(11) Publication number: **0 067 637**
**B1**

# EUROPEAN PATENT SPECIFICATION

(45) Date of publication of patent specification: 24.05.89

(51) Int. Cl.⁴: **G 01 G 3/142**

(21) Application number: 82302920.2

(22) Date of filing: 07.06.82

(54) Weight detection circuit for a load cell scale. ·

(30) Priority: 16.06.81 JP 93129/81

(43) Date of publication of application:
22.12.82 Bulletin 82/51

(45) Publication of the grant of the patent:
24.05.89 Bulletin 89/21

(84) Designated Contracting States:
CH DE FR GB IT LI NL SE

(56) References cited:
EP-A-0 009 712
US-A-4 061 198
STRAIN, volume 9, no. 2, April 1973
(NEWCASTLE, GB) G.M. BROWN "Applications
of operational amplifiers in strain gauge
circuits", pages 50-55
INSTRUMENT PRACTICE, volume 24, no. 4,
April 1970 (LONDON, GB) B.C. FISHER
"Applications of strain gauge transducers to
electrohydraulic test systems", pages 244-245
The file contains technical information
submitted after the application was filed and
not included in this specification

(73) Proprietor: KABUSHIKI KAISHA ISHIDA KOKI
SEISAKUSHO
44, Shogoin Sannou-cho Sakyo-ku
Kyoto-shi Kyoto 606 (JP)

(72) Inventor: Naito, Kazufumi
4-5 Yanagasaki Otsu-Si
Siga (JP)

(74) Representative: Arthur, Bryan Edward
Withers & Rogers 4 Dyer's Buildings Holborn
London EC1N 2JT (GB)

Courier Press, Leamington Spa, England.

**Description**

This invention relates to a weight detection circuit for a load cell scale.

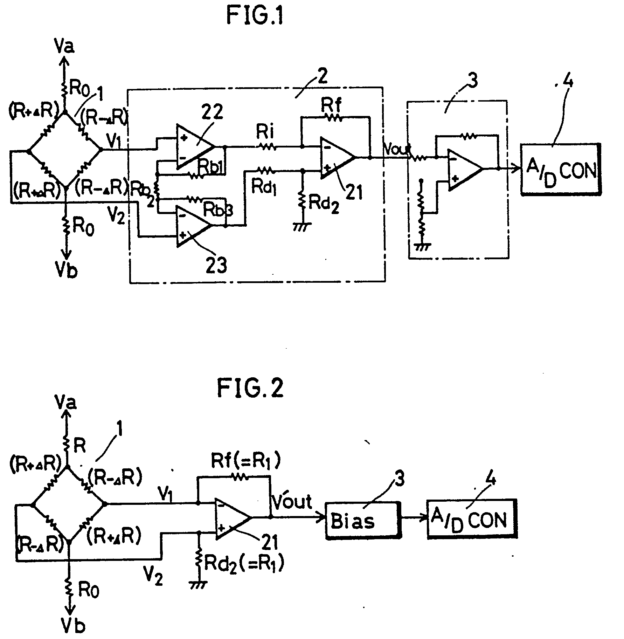

A conventional weight detection circuit for a load cell scale, as shown in Figure 1, has a bridge circuit 1 of strain gauge resistances bonded to a load cell which feeds an analogue voltage proportional to weight to a high input impedance differential amplifier stage 2, (e.g., an instrumentation amplifier). The output of the differential amplifier 2 is coupled to an analogue-to-digital (A/D) converter 4 through a bias circuit 3. In addition, resistances $R_0$ assocaited with the bridge circuit 1 serve as temperature-compensating resistances for the load cell.

For this circuit, the output voltage $V_{out}$ of the amplifier stage 2 is represented by the following equation:—

$$V_{out} = (V_1 - V_2)\alpha \qquad (1)$$

where $V_1$, $V_2$ are output voltages of bridge circuit 1, and $\alpha$ is an amplification factor of the amplifier stage 2.

By solving a node equation at each node of bridge circuit 1 the following relationship is obtained:—

$$(V_1 - V_2) = -(V_a - V_b)\Delta R/(R + 2R_0) \qquad (2)$$

where R is the strain gauge resistance at zero weight, $\Delta R$ is the resistance change (proportional to weight), $V_a$, $V_b$ are the applied voltages, and $R_0$ is the temperature compensating resistance. When Equation (2) is substituted into Equation (1), the following equation is obtained:

$$V_{out} = -(V_a - V_b)\Delta R/(R + 2R_0) \qquad (3)$$

In a weight detection circuit constructed as above, since the output of the bridge circuit 1 is amplified by the amplifier stage 2, the stage 2 is assumed to be independent, so that the temperature characteristics of (a) the four strain gauge resistances $(R \pm \Delta R)$ of the bridge circuit 1, (b) a feedback resistance $R_f$ and an input resistance $R_i$ of the amplifier stage 2, (c) two voltage-dividing resistances $R_{d1}$ and $R_{d2}$ thereof, and (d) three resistances $R_{b1}$, $R_{b2}$ and $R_{b3}$ of the amplifier stage 2, are enough to be unified at each group (a), (b), (c) or (d), but need not be unified as a whole, thereby facilitating the design. However, the number of parts increases so that the conventional weight detection circuit is disadvantageous due to high manufacturing cost.

The weight detection circuitry of U.S. Patents Nos. 3,831,687 and 4,177,868 is generally illustrative of conventional circuits. In addition, the article in the periodical "Strain" Vol. 9, No. 2, April 1973 (Newcastle, GB) G. M. Brown, "Applications of Operational Amplifiers in Strain Gauge Circuits" (pages 50—55) discloses a detection circuit in which an operational amplifier is connected to a strain gauge resistance, while U.S. Patent No. 4,061,198 discloses the coupling of an electrical bridge circuit to a weighing platform.

According to the present invention, a weight detection circuit for a load cell scale operable to feed an output signal to an A/D converter comprises a bridge circuit including a strain gauge resistance associated with the load cell, temperature compensating resistances coupled to each input terminal of the bridge circuit, an operational amplifier coupled to the output of the bridge circuit, a feedback resistance connected beween the inverting input and the output of the operational amplifier, and bias means, wherein the bias means comprises a pair of bias resistances, a said bias resistance being coupled respectively to each output terminal of the bridge circuit, the said bias resistances also being either individually in parallel with respective temperature compensating resistances or both in. parallel with one of the temperature compensating resistances, wherein the operational amplifier is directly supplied with the output signal from the bridge circuit, and wherein a voltage-dividing resistance is connected between the non-inverting input of the operational amplifier and ground, the value of said voltage-dividing resistance being equivalent to that of the feedback resistance.

In a preferred embodiment of the invention, the strain gauge bridge circuit resistances are attached to the load cell. If the feedback and voltage-dividing resistances are both equal to R1, and R is a reference resistance value of strain gauge resistance when the weight is zero, the circuit of the preferred embodiment is equivalent to a differential amplifier having an amplification factor of $2R_1/R$.

Coupling the bias resistance to the bridge circuit represents a considerable simplification of the prior art circuit, both in the biasing arrangement itself and in the differential amplifier stage, yielding a reduction in manufacturing cost.

The invention will now be described by way of example with reference to the drawings in which:

Figure 1 is a circuit diagram of the conventional weight detection circuit for a load cell scale as referred to above;

Figure 2 is a circuit diagram of a modification of the circuit of Figure 1 for explanatory purposes, the differential amplifier stage of Figure 1 having been simplified; and

Figures 3(a) and 3(b) are circuit diagrams of a weight detection circuit in accordance with the invention.

Referring to Figure 2, in a first modification of the circuit of Figure 1, the operational amplifiers 22 and 23, resistances $R_{b1}$, $R_{b2}$ and $R_{b3}$, input resistance $R_i$, and voltage-dividing resistance $R_{d1}$ on the non-ground side are omitted from a differential amplifier stage 2, and a feedback resistance $R_f$ is made equal in resistance value to a voltage-dividing resistance $R_{d2}$ on the ground side. In other words, the output of bridge circuit 1 is fed directy to an operational amplifier 21 and the aforesaid resistances have a relationship given by $R_f=R_{d2}=R_1$.

By setting up and solving node equations for the nodes of the bridge circuit of the circuit of Figure 2, it is found that the output is represented by the following equation:—

$$V'_{out}=-(V_a-V_b)(R_1 \cdot 2\Delta R)/(R_0 \cdot 2R+\Delta R^2 \tag{4}$$

where $R_1=R_f=R_{d2}$.

Here, $\Delta R^2$ is neglected since $R^2 \gg R^2$, therefore:—

$$V'_{out}=-(V_a-V_b)\Delta R \cdot 2R_1/R(R+2R_0) \tag{5}$$

When Equation (5) is compared with Equation (3), it will be appreciated that this circuit acts as a differential amplifier having an equivalent amplification factor of $2R_1/R$.

Consider the temperature characteristics of each strain gauge resistance of the bridge circuit, the feedback resistance $R_f$ of the operational amplifier 21, and the voltage-dividing resistance $R_{d2}$.

The strain gauge resistance is generally superior in temperature characteristic. Hence, the conventional strain gauge resistance is used as it is, and the feedback resistance $R_f$ and voltage-dividing resistance $R_{d2}$ are allowed to coincide in temperature characteristic with the strain gauge resistance, thereby obtaining a weight detection circuit extremely superior in the temperature characteristic as a whole and saving the number of parts.

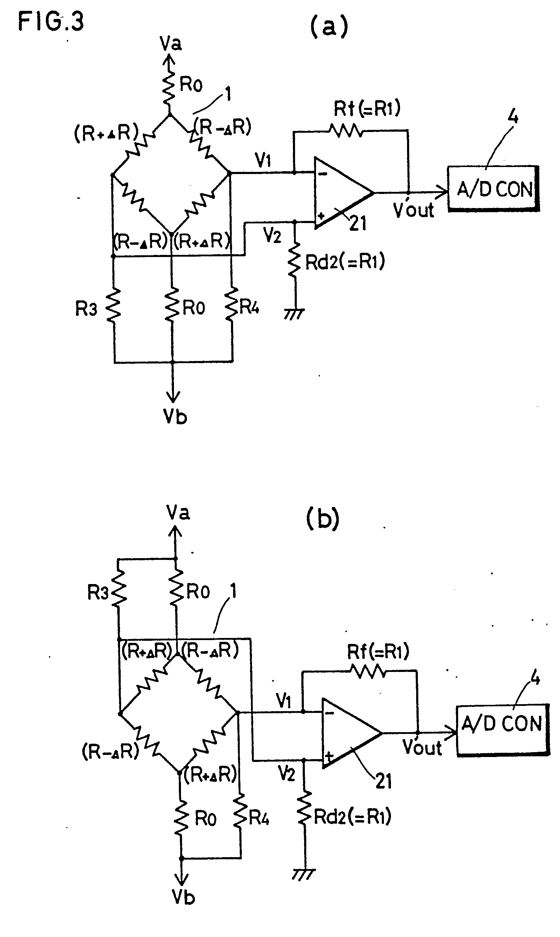

Referring now to Figures 3(a) and 3(b), a further modification is the omission of the bias circuit 3 of the conventional circuit and the connection of the output lines of the bridge circuit 1 to the applied voltages $V_a$ and $V_b$ through bias resistances $R_3$ and $R_4$. In Figures 3(a), only $V_b$ is used as a bias power source, whilst in Figures 3(b), both $V_a$ and $V_b$ are used as bias power sources.

For example, the solution of the node equation at each node of bridge circuit 1 for the circuit of Figure 3(a) yields an expression for output voltage $V'_{out}$ of operational amplifier 21 as follows:—

$$V'_{out}=-R_1\frac{2\Delta R}{2R \cdot R_0+R^2-\Delta R^2} \cdot (V_a-V_b)+\frac{R_1}{R_3}V_b$$

$$-\frac{R_1}{R_4}V_b+\{\frac{R_1{}^2(-1/R_3+1/R_4)}{2R \cdot R_1 \cdot R_3+(2R \cdot R_0+R^2-\Delta R^2)(R_1+R_3)}$$

$$\times[(2R \cdot R_0+R^2-\Delta R^2)V_b+R_3(R-\Delta R)V_a+R_3(R+\Delta R)V_b]\} \tag{6}$$

If $\Delta R^2$ is neglected due to $R^2 \gg R^2$.

$$V'_{out}\simeq\frac{-2R_1 \cdot \Delta R}{R(R+2R_0)} \cdot (V_a-V_b)+(R_1V_b/R_3-R_1V_b/R_4)$$

$$+\frac{R_1{}^2(-1/R_3+1/R_4)}{2R_1R_3+(R+2R_0)(R_1+R_3)}[(R+2R_0)V_b+R_3(V_a+V_b)]$$

$$-\frac{R_2(-1/R_3+1/R_4)}{2R_1R_3+(R+2R_0)(R_1+R_3)}(\Delta R/R) \cdot R_3(V_a-V_b) \tag{7}$$

Since the first term in Equation (7) is equal to Equation (5), this term represents an amplified weight signal component, the second and third terms being constant to represent a bias voltage. The fourth term (including $\Delta R$) represents an error voltage. An error rate is obtained by the use of the ratio of the first term to the fourth term as follows:—

$$\varepsilon=\frac{(R+2R_0)(R_3/R_4-1)}{2[2R_3+(R+2R_0)(1+R_3/R_1)]} \tag{8}$$

Values of $R_1$, $R_3$ and $R_4$ are selected to make the error rate smaller than the accuracy, the accuracy being the minimum scale divided by the maximum scalable capacity (which is a constant), whereby the fourth term of Equation (7) is negligible. Hence, this circuit has function sufficient for the weight detection circuit.

Similarly, solution of the node equation for Figure 3(b) yields:—

$$V'_{out} \simeq \frac{-2R_1\Delta R}{R(R+2R_0)}(V_a-V_b)+(R_1V_a/R_3-R_1V_b/R_4)$$

$$+\frac{R_1{}^2(-1/R_3+1/R_4)}{2R_1R_3+(R+2R_0)(R_1+R_3)}[(R+2R_0)V_a+R_3(V_a+V_b)]$$

$$-\frac{R_1{}^2(-1/R_3+1/R_4)}{2R_1R_3+(R+2R_0)(R_1+R_3)}(\Delta R/R)R_3(V_a-V_b) \qquad (9)$$

The first term of the equation (9), as in Equation (7), represents the amplified weight signal component, while the second and third terms represent bias voltage, and the fourth term an error voltage. Hence, the ratio of the first term and the fourth term, i.e., the error rate, is obtained similar to Equation (8) so that $R_1$, $R_3$ and $R_4$ may be selected to make the error rate smaller than the accuracy of the scale.

In addition, Equations (7) and (9) can be rearranged to replace the second and third terms by

$$[(R_1/R_3)V_{x1}-(R_1/R_4)V_{x2}]+\frac{R_1{}^2(-1/R_3+1/R_4)}{2R_1R_3+(R+2R_0)(R_1+R_3)}[(R+2R_0)V_{x1}+R_3(V_a+V_b)]$$

in which $V_{x1}$ represents an applied voltage at the resistance $R_3$ side and $V_{x2}$ represents that at the resistance $R_4$ side. Hence, $V_{x1}=V_{x2}=V_b$ in Equation (7), and $V_{x1}=V_a$ and $V_{x2}=V_b$ in Equation (9).

Furthermore, in two examples of Figures 3(a) and 3(b), the two bias resistances $R_3$ and $R_4$ have to be selected not to affect the temperature characteristic of the strain gauge resistance.

As seen from the above, the weight detection circuit for the load cell scale can simplify the high-input-impedance differential amplifier stage to thereby simplify the weight detection circuit, lower the manufacturing cost, and further simplify the bias circuit, thus improving the aforesaid effect.

## Claims

1. A weight detection circuit for a load cell scale operable to feed an output signal to an A/D converter, the circuit comprising a bridge circuit (1) including a strain gauge resistance associated with the load cell, temperature compensating resistance ($R_0$) coupled to each input terminal of the bridge circuit (1), an operational amplifier (21) coupled to the output of the bridge circuit, the feedback resistance ($R_f$) connected between the inverting input and the output of the operational amplifier (21), and bias means, wherein the bias means comprises a pair of bias resistances (R3, R4) a said bias resistance being coupled respectively to each output terminal of the bridge circuit (1), the said bias resistances also being either individually in parallel with respective temperature compensating resistances ($R_0$), or both in parallel with one of the temperature compensating resistances, wherein the operational amplifier (21) is directly supplied with the output signal from the bridge circuit (1), and wherein a voltage-dividing resistance ($R_{d2}$) is connected between the non-inverting input of the operational amplifier (21) and ground, the value of said voltage-dividing resistance ($R_{d2}$) being equivalent to that of the feedback resistance ($R_f$).

2. A weight detection circuit according to Claim 1, wherein the bridge circuit is attached to the load cell.

## Patentansprüche

1. Gewichtsdetektionsschaltungsanordnung für eine eine Lastmeßzelle aufweisende Waage, welche Schaltungsanordnung für die Zufuhr eines Ausgangssignales zu einem A/D-Wandler vorgesehen ist, wobei die Schaltungsanordnung eine Brückenschaltung (1) mit einem Dehnungsmeßstreifen-Widerstand, welcher der Lastmeßzelle zugeordnet ist, Temperaturkompensatorwiederstände ($R_0$) die mit jedem Eingangsanschluß der Brückenschaltung (1) verbunden sind, einen Operationsverstärker (21), der mit dem Ausgang der Brückenschaltung verbunden ist, einen Rückkopplungwiderstand ($R_f$) der zwischen den invertierenden Eingang und den Ausgang des Operationsverstärkers (21) geschaltet ist, sowie eine Vorspannungserzeugung aufweist, die zwei Vorspannungswiderstände (R3, R4) besitzt, von denen der eine mit dem einen und der andere mit dem anderen Ausgangsanschluß der Brückenschaltung (1) verbunden ist, wobei die genannten Vorspannungswiderstände außerdem entweder zugeordneten Temperaturkompensatorwiderständen ($R_0$) einzeln parallelgeschaltet oder gemeinsam einem der Temperaturkompensatorwiderstände parallelgeschaltet sind, wobei der Operationsverstärker (21) unmittelbar das Ausgangssignal der Brückenschaltung (1) zugeführt erhält und wobei ein Spannungsteilerwiderstand ($R_{d2}$) zwischen den nicht-invertierendern Eingang des Operationsverstärkers (21) und Masse geschaltet und der Widerstandswert des genannten Spannungsteilerwiderstandes ($R_{d2}$) äquivalent zu dem Widerstandswert des Rückkopplungswiderstandes ($R_f$) ist.

2. Gewichtsdetektionsschaltungsanordnung nach Anspruch 1, bei der die Brückenschaltung mit der Lastmeßzelle verbunden ist.

**Revendications**

1. Circuit de détection de poids pour une balance à cellule de charge ayant pour fonction de fournir un signal de sortie à un convertisseur A/D, le circuit comportant un circuit en pont (1) comprenant une résistance de jauge de contrainte associée à la cellule de charge, des résistances de compensation de température ($R_0$) couplées a chaque borne d'entrée du circuit en pont (1), un amplificateur opérationnel (21) couplé à la sortie du circuit en pont, une résistance de réaction ($R_f$) connectée entre l'entrée inverseuse et la sortie de l'amplificateur opérationnel (21) et un dispositif de polarisation, dans lequel le dispositif de polarisation comporte une paire de résisances de polarisation (R3, R4), l'une desdites résistances de polarisation étant couplée respectivement à chaque borne de sortie du circuit en pont (1), lesdites résistances de polarisation étant également individuellement en parallèle avec les résistances respectives de compensation de température ($R_0$) ou toutes deux en parallèle avec l'une des résistances de compensation de température, dans lequel l'amplificateur opérationnel (21) reçoit directement le signal de sortie du circuit en pont (1) et dans lequel une résistance de division de tension ($R_{d2}$) est connectée entre l'entrée non inverseuse de l'amplificateur opérationnel (21) et la masse, la valeur de ladite résistance de division de tension ($R_{d2}$) étant équivalente à celle de la résistance de réaction ($R_f$).

2. Circuit de détection de poids selon la revendication 1, dans lequel le circuit en pont est relié à la cellule de charge.

# FIG.1

# FIG.2

FIG.3

(a)

(b)

2